# EUROPEAN PATENT SPECIFICATION

(11) **EP 2 447 054 B1**
(45) Date of publication and mention of the grant of the patent: **15.02.2017**
(21) Application number: 10194326.4
(22) Date of filing: 09.12.2010
(51) Int. Cl.: B32B 5/00, E04F 15/10

(54) **METHOD FOR MANUFACTURING A SELF BONDING FLOOR TILE**
VERFAHREN ZUR HERSTELLUNG EINER SELBSTHAFTENDEN BODENFLIESE
PROCÉDÉ DE FABRICATION DE CARRELAGES AUTO-ADHÉSIFS

(30) Priority: 26.10.2010 CN 201010522705
(43) Date of publication of application: 02.05.2012
(73) Proprietor: Shanghai Jinka Flooring Technology Co., Ltd., East Ind. District, Wai-gang, Jia-ding Shanghai Shanghai (CN)
(72) Inventor: Yu, Hsiung-Tieh, Shanghai (CN); Lee, Shih-Chung, Shanghai (CN)
(74) Representative: Reichert & Lindner Partnerschaft Patentanwälte

(56) References cited:
- GB-A- 2 359 779

## Description

The present invention relates to a ground decoration material and manufacturing method thereof, more particularly to a self bonding floor tile and manufacturing method thereof.

With the improvements of living standards, people paid more attentions to home environments, as an important component of interior decoration, floor tile, of course, obtains more attentions. Presently, the widely used floor tiles comprise woodiness floor tile, natural stone floor tile, and composite floor tile, or etc. All of the currently installation manners used for various floor tiles have obvious shortcomings, which are described in detail as follows.

The woodiness floor tiles are interlocked with each other into a whole, if some of the floor tiles are damaged and need to be replaced, the whole floor needs to be replaced, which causes high replacement cost. The natural stone floor tiles are adhered to the ground by cement, once the floor tiles are installed, they cannot be replaced except for destroying them. The composite floor tiles are adhered to the ground by white glue, Acryl glue or other chemical glues. They are permanently adhered to the ground and cannot be partly replaced except for destroying them. Furthermore, such present floor tiles have a common shortcoming of need to be installed by special technical workers, which increases the installation cost of the present floor tiles.

For decreasing the installation and replacement cost, technician of the industry had conducted many attempts, such as, CONNECTAL and LUKE products which are very popular in America, such product includes an upper portion and a lower portion, both of the portions have similar configurations and similar sizes. During manufacturing, opposite sides of the floor tiles are manufactured to structures capable of being overlapped. During installation, the products are staggered according to a predetermined special position relationship and the overlapped portions are coated with hot-melt pressure sensitive adhesive, then corresponding sides of adjacent floor tiles are adhered together under pressure, and all the floor tiles are joined together into a whole. However, such floor tiles still have obvious shortcomings. Because the opposite sides of the floor tiles are coated with adhesive, and the floor tiles are generally long, it is uneasy to place the floor tiles at the right position during adhering; furthermore, once two floor tiles are joined together, it is hard to reregulate their positions. Thus, the worker could not make sure of an accurate and perfect installation, thereby influencing the usage of the floor. Moreover, because the working surfaces of the floor tiles are joined together as a whole, the problem of localised replacement still cannot be well resolved.

There is another kind of floor tiles called as LOOSE LAY. The LOOSE LAY has greater weight and thickness than conventional floor tile, and includes a plastic layer of low hardness at its bottom. During installation, due to the adaptability (which means the bottom of the floor tiles can be reshaped according to the ground condition ) generated by the their own weight and their soft bottom layers of the floor tiles, the LOOSE LAY can be directly installed to the ground without any glue. The LOOSE LAY can be installed and replaced easily, but because there is no adhesion between the floor tiles and the ground, the LOOSE LAY can easily be moved by external force during usage, which influences the usage of the floor tiles.

Therefore, it is need to provide an improved product for substituting the present conventional floor tile, which can not satisfy the usage function only, but also can be easily installed, partly or wholly replaced with low cost. The product of the present invention can also be used for decorating ceiling, wall and wardrobe besides decorating the ground. Furthermore, it is need to provide a method for manufacturing such self bonding floor tile.

British Patent Publication No. GB 2359779A discloses releasable bonding systems for releasably bonding impermeable floor coverings such as vinyl and linoleum in tile and sheet form to a floor surface. On preparing a suitable surface, a quantity of a first water-base adhesive is applied, into which a porous or perforated intermediate membrane can then be laid and brushed over carefully. Once a convenient area of the intermediate membrane has been laid, a second adhesive may be applied, into which the impermeable covering can then be laid and rolled in the usual manner. The second adhesive dries through the intermediate membrane to the floor surface. At a time of replacement or repair, when the floor covering is removed, the intermediate membrane is also removed, leaving an undamaged floor surface with an adhesive residue which may either be washed away to remove it or have fresh adhesive applied over it.

The present invention is also to provide a method for manufacturing a self bonding floor tile, the self bonding floor tile can be quickly installed, easily and partly replaced, and with low installation and replacement cost.

The present invention provides a method for manufacturing a self bonding floor tile. The method includes: providing a main body; spreading a first adhesive over the main body; providing an absorbate with porous or wick structure, and adding the absorbate to the first adhesive; spreading a second adhesive over the absorbate.

In an embodiment of the present invention, after the absorbate is added to the first adhesive, a portion of the absorbate extends into the first adhesive, and the other portion of the absorbate is exposed outside of the first adhesive.

In an embodiment of the present invention, the step of spreading the second adhesive over the absorbate means spreading the second adhesive over the portion of the absorbate which exposed outside of the first adhesive.

In an embodiment of the present invention, the absorbate is added to the first adhesive by electrostatic spraying, flocking process, knitting method.

In an embodiment of the present invention, the second adhesive is spread over the absorbate by hot transfer process, spraying method.

In an embodiment of the present invention, after the step of adding the absorbate to the first adhesive, the first adhesive is cured. After the first adhesive is cured, the absorbate is securely coupled with the first adhesive into a whole.

In an embodiment of the present invention, the absorbate is cotton fiber, glass fiber, blend fiber, or flocked fiber.

In an embodiment of the present invention, the first adhesive is PVC paste resins, epoxy adhesive, phenolglue, vinyl adhesive, or polyurethane adhesive, and the second adhesive is hot-melt pressure sensitive adhesive.

In an embodiment of the present invention, the step of providing a main body includes: providing a base layer, a decoration layer and a wear-resistant layer; and hot-pressing the base layer, the decoration layer and the wear-resistant layer to be a whole.

In an embodiment of the present invention, the step of spreading a first adhesive over the main body means spreading the first adhesive over the base layer of the main body.

The self bonding floor tile of the present invention utilizes the soft, porous substance or the soft substance with wick structure as the absorbate of the self bonding layer, due to the soft and porous characteristics, the self bonding floor tile will not excessively bonded to the body to be decorated. Therefore, when the self bonding floor tile needs to be partly replaced, it is convenient to remove the part of the self bonding floor tile which needs to be replaced. Furthermore, due to the porous and large surface area characteristics of the absorbate, when spreading the second adhesive, the second adhesive will penetrate into the interior of the absorbate besides spreading over the outer surface of the absorbate. Therefore, the adhesion between the second adhesive and the absorbate is greater than the second adhesive and the body to be decorated. Thus, when removing or replacing the self bonding floor tile, the self bonding floor tile can be easily removed from the body by a sufficient force without leaving debris of the second adhesive on the body. This simplifies the remove process of the self bonding floor tile, and makes the self bonding floor tile can be easily and partly replaced, with low installation and replacement cost.

In the manufacturing method of the self bonding floor tile of the present invention, the absorbate is added to the first adhesive after the first adhesive is spread over the base layer, therefore, the absorbate is securely coupled with the first adhesive into a whole after the first adhesive is cured, which increases the adhesion between the self bonding layer and the base layer, prevents delamination of the self bonding layer and the base layer during remove of the self bonding floor tile, and results the convenient remove and replacement of the self bonding floor tile.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 is a cross sectional view of a self bonding floor tile according to an embodiment of the present invention, with a part of the self bonding floor tile enlarged.
FIG. 2 is a flow chart of a manufacturing method of the self bonding floor tile according to an embodiment of the present invention.

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

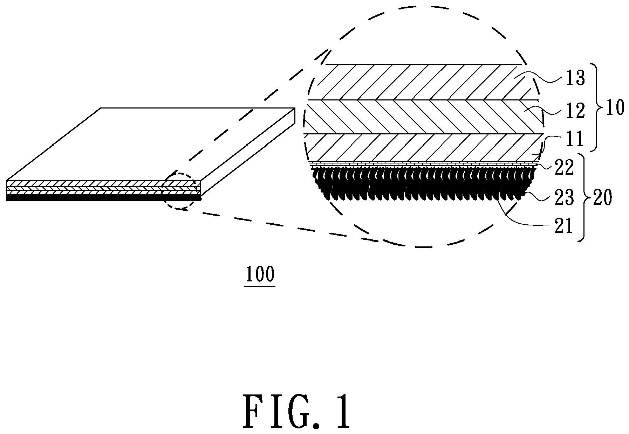

FIG. 1 is a cross sectional view of a self bonding floor tile according to an embodiment of the present invention, with a part of the self bonding floor tile enlarged. Referring to FIG. 1, the self bonding floor tile 100 of the present invention includes a main body 10 and a self bonding layer 20.

The main body 10 is the core layer of the self bonding floor tile 100; the hardness, weight and other physical characteristics are decided by the main body 10. The main body 10 includes a base layer 11, a decoration layer 12 and a wear-resistant layer 13.

The base layer 11 is made of a mixture of polyvinylchloride (PVC), plasticizer and filler.

The decoration layer 12 is located above the base layer 11, and it is formed from printing patterns on a polyvinylchloride film, such that the self bonding floor tile 100 has an excellent visual effect.

The wear-resistant layer 13 is located above the decoration layer 12, and it is usually of a transparent film made of polyvinylchloride. The wear-resistant layer 13 is for increasing the wear-resistant quality of the self bonding floor tile 100, and decreasing the wear and tear of the self bonding floor tile 100, such that the self bonding floor tile remains a good-looking appearance after long term usage.

The self bonding layer 20 is located below the base layer 11 of the main body 10, and includes an absorbate 21, a first adhesive 22 and a second adhesive 23 disposed at opposite sides of the absorbate 21 respectively.

The absorbate 21 is a soft, porous substance or a soft substance with wick structure. The absorbate 21 may be cotton fiber, glass fiber, blend fiber, flocked fiber, or etc. During manufacture, at least a portion of the absorbate 21 extends into the first adhesive 22 and securely joined with the first adhesive 22. The second adhesive 23 penetrates into a deeper position of the other portion of the absorbate 21, and provides the self bonding floor tile 100 of good resilient capability.

The first adhesive 22 may be PVC paste resins, epoxy adhesive, phenolglue, vinyl adhesive, polyurethane adhesive, or etc. The first adhesive 22 is for providing sufficient adhesion between the self bonding layer 20 and the main body 10 such that the self bonding layer 20 and the main body 10 are securely bonded together.

The second adhesive 23 may be hot-melt pressure sensitive adhesive (HMPSA), and at least a portion of the second adhesive 23 penetrates into the absorbate 21, for providing sufficient adhesion between the self bonding floor tile 100 and a body such as floor, ceiling, wall, wardrobe, or etc., which intends to be decorated, such that the self bonding floor tile 100 can be installed to the body easily. The second adhesive 23 also make sure that the self bonding floor tile 100 can be removed from the body easily by a sufficient force without leaving debris of the second adhesive 23 on the body. The second adhesive 23 further has good waterproof capability for providing the self bonding floor tile 100 of good moistureproof capability. For convenient manufacture, package and transportation of the floor tile 100, a release paper (not shown) with silicone oil spread thereon may be attached on a lower surface of the second adhesive 23.

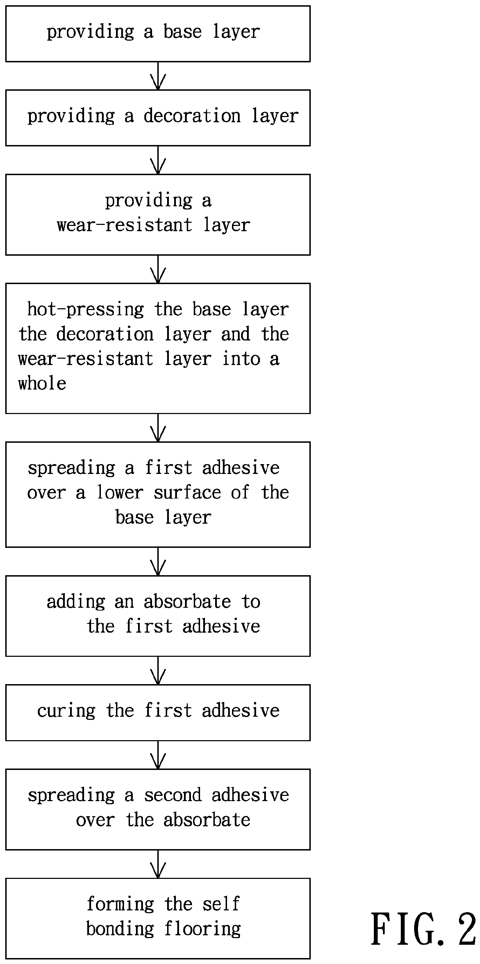

FIG. 2 shows a manufacturing method of the present self bonding floor tile 100. Referring to FIG. 2, the manufacture method of the self bonding floor tile 100 includes: providing a base layer 11; providing a decoration layer 12; providing a wear-resistant layer 13; hot-pressing the base layer 11, the decoration layer 12 and the wear-resistant layer 13 into a whole, thereby forming the main body 10 of the self bonding floor tile 100; spreading a first adhesive 22 over a lower surface of the base layer 11 by spraying, transfer printing or other coating methods; adding an absorbate 21 to the first adhesive 22 by electrostatic spraying, flocking process, knitting or other suitable methods, and making a portion of the absorbate 21 extended into the first adhesive 22, and the other portion of the absorbate 21 exposed outside of the first adhesive 22, such that the absorbate 21 can be securely coupled with the first adhesive 22 into a whole after the first adhesive 22 is cured; then, curing the first adhesive 22; spreading a second adhesive 23 over the portion of the absorbate 21 which is exposed outside of the first adhesive 22 by hot transfer process, spraying or other suitable methods, and making the second adhesive 23 to sufficiently penetrate into the absorbate 21; finally, forming the self bonding floor tile 100.

As mentioned above, the self bonding floor tile 100 at least has the following advantages :
1. The self bonding floor tile 100 of the present invention utilizes the soft, porous substance or the soft substance with wick structure as the absorbate 21 of the self bonding layer 20. Due to the soft and porous characteristics, the self bonding floor tile 100 will not excessively bonded to the body to be decorated. Therefore, when the self bonding floor tile 100 needs to be partly replaced, it is convenient to remove the part of the self bonding floor tile 100 which needs to be replaced. Furthermore, due to the porous and large surface area characteristics of the absorbate 21, when spreading the second adhesive 23, the second adhesive 23 will penetrate into the interior of the absorbate 21 besides spreading over the outer surface of the absorbate 21. Therefore, the adhesion between the second adhesive 23 and the absorbate 21 is greater than that between the second adhesive 23 and the body to be decorated. Thus, when removing or replacing the self bonding floor tile 100, the self bonding floor tile 100 can be easily removed from the body by a sufficient force without leaving debris of the second adhesive 23 on the body. This simplifies the remove process of the self bonding floor tile 100, and makes the self bonding floor tile 23 to be easily and partly replaced, with low installation and replacement cost. Furthermore, because both of the first adhesive 22 and the second adhesive 23 extend into the absorbate 21, a total thickness of the self bonding floor tile 100 is therefore decreased.
2. In the manufacturing method of the self bonding floor tile 100, the absorbate 21 is added to the first adhesive 22 after the first adhesive 22 is spread over the base layer 11; therefore, the absorbate 21 can be securely coupled with the first adhesive 22 into a whole after the first adhesive 22 is cured, which increases the adhesion between the self bonding layer 20 and the base layer 11 and prevents the self bonding layer 20 from delaminating from the base layer 11 during remove of the self bonding floor tile 100, and results in the convenient remove and replacement of the self bonding floor tile 100. Moreover, because the second adhesive 23 is directly spread over the absorbate 21, as compared to a conventional art in which the adhesive needs to be spread over the release paper at first and then transferred to the base layer, the present invention can avoid the unsecure adhering between the adhesive and the base layer due to the drape of the release paper, and furthermore, decrease the burden of the release paper and the incidence rate of the drape of the release paper.

In the present embodiment, the base layer 11 is made of a mixture of polyvinylchloride (PVC), plasticizer and filler. Optionally, the base layer 11 may be made of conventional log, PVC/Wood Flour Composites, marble, ceramics or etc. If the base layer 11 is made of such materials, the decoration layer 12 and/or the wear-resistant layer 13 may be omitted as needed. In case both of the decoration layer 12 and the wear-resistant layer 13 are omitted, the base layer 11 functions as the main body 10 of the self bonding floor tile 100. Correspondingly, the process for providing the decoration layer 12 and/or the wear-resistant layer 13 also needs to be deleted.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A method for manufacturing a self bonding floor tile (100), comprising:
providing a main body (10);
spreading a first adhesive (22) over the main body (10);
providing an absorbate (21) with porous or wick structure;and spreading a second adhesive (23) over the absorbate (21);
**characterized by**
adding the absorbate (21) to the first adhesive (22), wherein after the absorbate (21) is added to the first adhesive (22), a portion of the absorbate (21) extends into the first adhesive (22) and the other portion of the absorbate (21) is exposed outside of the first adhesive (22).

2. The method according to claim 1, wherein the step of spreading the second adhesive (23) over the absorbate (21) means spreading the second adhesive (23) over the portion of the absorbate (21) which exposed outside of the first adhesive (22).

3. The method according to claim 1, wherein the absorbate (21) is added to the first adhesive (22) by electrostatic spraying, flocking process, or knitting method.

4. The method according to claim 1, wherein the second adhesive (23) is spread over the absorbate (21) by hot transfer process, or spraying method.

5. The method according to claim 1, wherein after the step of adding the absorbate (21) to the first adhesive (22), the first adhesive (22) is cured.

6. The method according to claim 5, wherein after the first adhesive (22) is cured, the absorbate (21) is securely coupled with the first adhesive (22) into a whole.

7. The method according to claim 1, wherein the absorbate (21) is cotton fiber, glass fiber, blend fiber, or flocked fiber.

8. The method according to claim 1, wherein the first adhesive (22) is PVC paste resins, epoxy adhesive, phenolglue, vinyl adhesive, or polyurethane adhesive, and the second adhesive (23) is hot-melt pressure sensitive adhesive.

9. The method according to claim 1, wherein the step of providing a main body (10) comprises:
providing a base layer (11), a decoration layer (12) and a wear-resistant layer (13); and
hot-pressing the base layer (11), the decoration layer (12) and the wear-resistant layer (13) to be a whole.

10. The method according to claim 9, wherein the step of spreading a first adhesive (22) over the main body (10) means spreading the first adhesive (22) over the base layer (11) of the main body (10).

## Patentansprüche

1. Ein Verfahren zum Herstellen einer selbstklebenden Bodenfliese (100), das Folgendes umfasst:
Bereitstellen eines Hauptkörpers (10);
Auftragen eines ersten Klebemittels (22) auf den Hauptkörper (10);
Bereitstellen eines Absorbats (21) von poröser oder dochtartiger Struktur; und
Auftragen eines zweiten Klebemittels (23) auf das Absorbat (21),
**gekennzeichnet durch**
Hinzufügen des Absorbats (21) zum ersten Klebemittel (22), wobei nach dem Hinzufügen des Absorbats (21) zum ersten Klebemittel (22) ein Teil des Absorbats (21) in das erste Klebemittel (22) hineinreicht und der andere Teil des Absorbats (21) außerhalb des ersten Klebemittels (22) exponiert ist.

2. Das Verfahren gemäß Anspruch 1, bei welchem der Schritt des Auftragens des zweiten Klebemittels (23) auf das Absorbat (21) bedeutet, dass das zweite Klebemittel (23) auf den Teil des Absorbats (21) aufgetragen wird, der außerhalb des ersten Klebemittels (22) exponiert ist.

3. Das Verfahren gemäß Anspruch 1, bei welchem das Absorbat (21) dem ersten Klebemittel (22) durch elektrostatisches Sprayen, ein Beflockungsverfahren oder ein Strickverfahren zugefügt wird.

4. Das Verfahren gemäß Anspruch 1, bei welchem das zweite Klebemittel (23) durch einen Heißübertragungsprozess oder ein Spritzverfahren auf das Absorbat (21) aufgetragen wird.

5. Das Verfahren gemäß Anspruch 1, bei welchem nach dem Schritt des Hinzufügens des Absorbats (21) zum ersten Klebemittel (22) das erste Klebemittel (22) gehärtet wird.

6. Das Verfahren gemäß Anspruch 5, bei welchem nach Härten des ersten Klebemittels (22) das Absorbat (21) mit dem ersten Klebemittel (22) fest zu einem Ganzen verbunden wird.

7. Das Verfahren gemäß Anspruch 1, bei welchem das Absorbat (21) eine Baumwollfaser, Glasfaser, Mischfaser oder geflockte Faser ist.

8. Das Verfahren gemäß Anspruch 1, bei welchem das erste Klebemittel (22) ein PVC-Pastenharz, ein Epoxidkleber, Phenolkleber, Vinylklebstoff oder Polyurethanklebstoff ist, und das zweite Klebemittel (23) ist ein druckempfindlicher Heißschmelzkleber ist.

9. Das Verfahren gemäß Anspruch 1, bei welchem der Schritt des Bereitstellens eines Hauptkörpers (10) umfasst:
Bereitstellen einer Grundschicht (11), einer Dekorationsschicht (12) und einer wasserabweisenden Schicht (13); und
Heißpressen der Grundschicht (11), der Dekorationsschicht (12) und der wasserabweisenden Schicht (13) zur Verbindung zu einem Ganzen.

10. Das Verfahren gemäß Anspruch 9, bei welchem der Schritt des Auftragens eines ersten Klebemittels (22) auf den Hauptkörper (10) bedeutet, dass das erste Klebemittel (22) auf der Grundschicht (11) des Hauptkörpers (10) aufgetragen wird.

## Revendications

1. Un procédé de fabrication de carrelages auto-adhésifs (100) comprenant:
la fourniture d'un corps principal (10),
la répartition d'un premier adhésif (22) sur le corps principal (10),
la fourniture d'un absorptif (21) avec une structure poreuse ou de mèche, et
la répartition d'un second adhésif (23) sur l'absorptif (21),
**caractérisé par**
l'ajout de l'absorptif (21) au premier adhésif (22), après que l'absorptif (21) est ajouté au premier adhésif (22), une portion de l'absorptif (21) s'étendant dans le premier adhésif (22) et l'autre portion de l'absorptif (21) étant exposée à l'extérieur du premier adhésif (22).

2. Le procédé selon la revendication 1 selon lequel l'étape de répartition du second adhésif (23) sur l'absorptif (21) signifie répartir le second adhésif (23) sur la portion de l'absorptif (21) qui est exposé à l'extérieur du premier adhésif (22).

3. Le procédé selon la revendication 1 selon lequel l'absorptif (21) est ajouté au premier adhésif (22) par pulvérisation électrostatique, flocage ou tricotage.

4. Le procédé selon la revendication 1 selon lequel le second adhésif (23) est réparti sur l'absorptif (21) par transfert à chaud ou une méthode de pulvérisation.

5. Le procédé selon la revendication 1 selon lequel après l'étape d'ajout de l'absorptif (21) au premier adhésif (22), le premier adhésif (22) a durci.

6. Le procédé selon la revendication 5 selon lequel après que le premier adhésif (22) a durci, l'absorptif (21) est couplé de manière sûre au premier adhésif (22) en tant que tout.

7. Le procédé selon la revendication 1 selon lequel l'absorptif (21) est de la fibre de coton, de la fibre de verre, de la fibre mixte ou de la fibre floquée.

8. Le procédé selon la revendication 1 selon lequel le premier adhésif (22) est de la résine de pâte PVC, un adhésif époxy, de la colle phénolique, un adhésif vinyle ou un adhésif de polyuréthane, et le second adhésif (23) est un adhésif thermofusible sensible à la pression.

9. Le procédé selon la revendication 1 selon lequel l'étape de fourniture d'un corps principal (10) comprend:
la fourniture d'une couche de base (11), d'une couche de décoration (12) et d'une couche résistant à l'usure (13) ; et
la pression à chaud de la couche de base (11), la couche de décoration (12) et la couche résistant à l'usure (13) en tant que tout.

10. Le procédé selon la revendication 9 selon lequel l'étape de répartition d'un premier adhésif (22) sur le corps principal (10) signifie répartir le premier adhésif (22) sur la couche de base (11) du corps principal (10).
